# EUROPÄISCHE PATENTSCHRIFT

(11) **EP 1 227 049 B1**
(45) Veröffentlichungstag und Bekanntmachung des Hinweises auf die Patenterteilung: **03.12.2003**
(21) Anmeldenummer: 01130391.4
(22) Anmeldetag: 20.12.2001
(51) Int. Cl.: B65D 83/00

(54) **Vorrichtung zum Entleeren eines Schlauchbeutels**
A tapping device for a tubular bag
Dispositif pour vider un sachet tubulaire

(30) Priorität: 24.01.2001 DE 10103194
(43) Veröffentlichungstag der Anmeldung: 31.07.2002
(73) Patentinhaber: Heraeus Kulzer GmbH & Co.KG, 63450 Hanau (DE)
(72) Erfinder: von Schuckmann, Alfred, 47627 Kevelaer (DE); Nehren, Klaus Dieter, 41539 Domagen (DE)
(74) Vertreter: Kühn, Hans-Christian

(56) Entgegenhaltungen:
- WO-A-00/61457
- DE-U- 29 705 488
- FR-A- 2 617 825
- GB-A- 2 154 991

## Beschreibung

Die Erfindung betrifft eine Vorrichtung zum Entleeren eines Schlauchbeutels.

Aus dem Stand der Technik sind selbstöffnende Schlauchbeutelpackungen bekannt, die fest an der Stirnseite eines Bodenteils angeordnet sind, wobei durch Druck auf die Folienbeutel die feststehenden Messer sich in den Schlauchbeutel drücken und diesen somit öffnen.

Insbesondere aus DE 297 05 488 ist eine Vorrichtung zum Entleeren eines Schlauchbeutels offenbart, umfassend ein an einem Ende des Schlauchbeutels fixierbares kappenartiges Aufnahmeteil, das eine in einer Austrittsöffnung mündende Vertiefung und eine darin angeordnete Einrichtung zum Öffnen der Schlauchbeutelfolie aufweist, wobei die Vorrichtung dadurch gekennzeichnet ist, dass der Schlauchbeutel mit einer ihn stirnseitig abstützenden Querfläche des Aufnahmeteils haftverbunden ist. Die Einrichtung zum Öffnen ist ein feststehender Dorn oder ein Messer.

EP 0 922 645 A1 offenbart einen Applikator für dünnflüssige Medien mit einem Schneidelement, dessen Unterseite schräg ausgebildet und mit einer Schneidkante zum Aufbrechen einer Membran versehen ist.

Nachteilig bei diesen Ausführungsformen ist die Tatsache, dass die Beutel sehr exakt aufgetrennt werden müssen, um die Funktionsfähigkeit der Entleerung des Schlauchbeutels zu gewährleisten. Es ist insbesondere in nachteiliger Weise notwendig, eine dichte Verklebung und Abdichtung von Schlauchbeutel und Aufnahmeteil zu gewährleisten, was relativ hohe Herstellungskosten nach sich zieht.

Aus dem Vorgenannten ergibt sich das Problem, mit Hilfe einer neuartigen Vorrichtung die oben genannten Nachteile zumindest teilweise zu vermeiden, insbesondere eine Vorrichtung bereitzustellen, die in der Lage ist, auch bei Schlauchbeutelfolienmaterialien mit geringer Dehnfähigkeit bzw. hoher Weiterreißfestigkeit eine ausreichend große und reproduzierbare Öffnung zu erzeugen, ohne das Teile der Folie abgetrennt und mit dem Inhalt des Schlauchbeutels ausgetragen werden.
Dieses Problem wird erfindungsgemäß durch eine Vorrichtung nach Anspruch 1 gelöst.

Die erfindungsgemäße Vorrichtung zum Entleeren eines Schlauchbeutels umfasst ein an einem Ende des Schlauchbeutels fixierbares kappenartiges Aufnahmeteil, das eine rohrförmige Austrittsöffnung und eine darin angeordnete Einrichtung zum Öffnen des Schlauchbeutels aufweist. Die Einrichtung ist ein helical-schneidendes Messer, d. h., dass dieses Messer sich quasi wie eine archimedische Schraube in das Schlauchbeutelfolienmaterial einschneiden kann.

Die gebogene Ausgestaltung des Messers trägt dafür Sorge, dass beim Einstechen ein S-förmiger Einschnitt entsteht, der selbst bei Folien mit unzureichender Dehnfähigkeit oder sehr hoher Weiterreißfestigkeit eine ausreichend große und reproduzierbare Öffnung erzeugt, ohne dass Teile der Folie abgetrennt und mit dem Inhalt des Schlauchbeutels ausgetragen werden.

Zunächst ist es von Vorteil, wenn das Messer mittels eines einschiebbaren Stutzens in der Austrittsöffnung drehbar und in Schlauchbeutelrichtung verschiebbar ist, da auf diese Art und Weise eine Anpassung an das jeweilige Schlauchbeutelfolienmaterial dahingehend möglich ist, eine optimale Schneidstellung des Messers bereitzustellen. Weiterhin ist es vorteilhaft, wenn das Messer in einer den Schlauchbeutel öffnenden Endstellung arretierbar ist, da auf diese Art und Weise ein unbeabsichtigtes Zurückversetzen des Messers und ein damit ggf. Verschließen des Schlauchbeutels verhindert und somit ein sicheres Entleeren bewerkstelligt wird.

Schließlich ist es von Vorteil, wenn der Stutzen gegen die Innenwand der rohrförmigen Austrittsöffnung dichtet, um auf diese Art und Weise ein unkontrolliertes Auslaufen des Schlauchbeutelinhaltes zwischen rohrförmiger Austrittsöffnung und Stutzen zu verhindern.

Das nachfolgende Beispiel dient zur Erläuterung der Erfindung.

Die Figuren zeigen:
- Figur 1: eine skizzenhafte Darstellung einer erfindungsgemäßen Vorrichtung bei ungeöffnetem Schlauchbeutel im Querschnitt;
- Figur 2: eine skizzenhafte Darstellung der in Figur 1 dargestellten Vorrichtung bei geöffnetem Schlauchbeutel;
- Figur 3: eine skizzenhafte Aufsicht eines einen Schlauchbeutel schneidend öffnendes Messer;
- Figur 4: eine skizzenhafte dreidimensionale Darstellung des in Figur 3 dargestellten Messers;
- Figur 5: eine skizzenhafte Aufsicht einer weiteren Ausführungsform eines Messers;
- Figur 6: eine skizzenhafte dreidimensionale Darstellung des in Figur 5 dargestellten Messers.

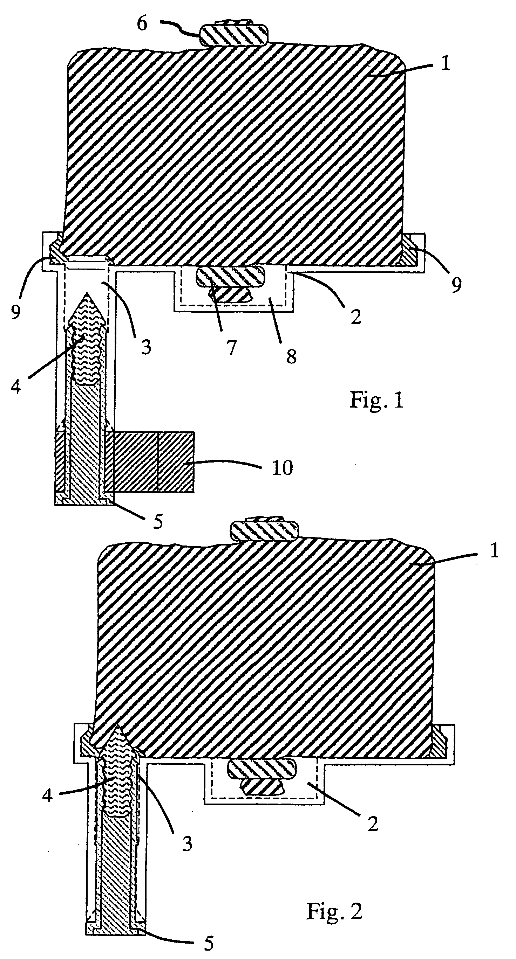

Figur 1 zeigt eine erfindungsgemäße Vorrichtung zum Entleeren eines Schlauchbeutels 1, wobei dieser durch einen oberen und unteren Beutelclip 6, 7 verschlossen ist und der untere Beutelclip 7 in einer entsprechenden Vertiefung 8 eines kappenartigen Aufnahmeteils 2 angeordnet ist. Der Schlauchbeutel 1 ist mit dem kappenartigen Aufnahmeteil 2 lediglich über die inneren Seitenwände 9 des Aufnahmeteils mittels eines Klebstoffs fixiert.

Das kappenartige Aufnahmeteil 2 weist eine rohrförmige Austrittsöffnung 3 auf, in der sich mittels einer entfernbaren Transportsicherung 10 ein Doppelklingenmesser 4 mit anschließendem helixförmigen Schneidklingenverlauf angeordnet ist. Das Messer ist mittels eines einschiebbaren Stutzens 5 in der rohrförmigen Austrittsöffnung 3 drehbar gelagert.

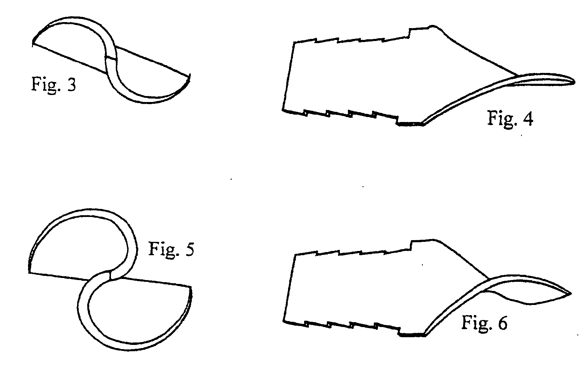

Zum Durchschneiden des Schlauchbeutels 1 zum Entleeren des jeweiligen Schlauchbeutelinhaltes wird die Transportsicherung 10 entfernt und anschließend der Stutzen 5 bis zum Anschlag in Richtung Schlauchbeutel 1 eingeschoben, so dass das Messer 4 den Schlauchbeutel 1 an der jeweiligen Stelle aufschneidet (siehe Figur 2).

Mittels Druckbeaufschlagung kann nunmehr der Inhalt des Schlauchbeutels 1 durch die jeweilige Schnittöffnung und anschließend durch die rohrförmige Austrittsöffnung 3 und den hohlförmigen Stutzen 5 applizierend entleert werden.

Der Stutzen 5 dichtet gegen die Innenwand der rohrförmigen Austrittsöffnung 3 ab, so dass der jeweilige Schlauchbeutelinhalt nicht unkontrolliert zwischen Stutzen 5 und Austrittsöffnung 3 hindurchtritt.

In den Figuren 3 bis 6 sind zwei unterschiedliche Ausgestaltungen eines in der erfindungsgemäßen Vorrichtung angeordneten Messers zum Entleeren eines Schlauchbeutels dargestellt, wobei das Messer erfindungsgemäß im Schneidbereich quasi wie eine angedeutete Archimedesschraube geformt ist, so dass die Schneidfläche ein bis zum Scheitelpunkt, also quasi bis zur Spitze des Messers, einen helixartigförmigen Verlauf aufweist.

Im hinteren Bereich weist das Messer mehrere Materialvorsprünge auf, die zur Arretierung und Fixierung in der erfindungsgemäßen Vorrichtung dienen, damit beim Aufsetzen eines Schlauchbeutels das Messer nicht unvorhergesehen zurückgeschoben wird.

Durch die speziell gebogene Ausgestaltung des Messers entsteht beim Einstechen eines Schlauchbeutels ein S-förmiger Einschnitt, der selbst bei Folien mit unzureichender Dehnfähigkeit oder sehr hoher Weiterreißfestigkeit eine ausreichend große und reproduzierbare Öffnung erzeugt, ohne das Teile der Folie abgetrennt mit dem Inhalt des Schlauchbeutels ausgetragen werden.

## Patentansprüche

1. Vorrichtung zum Entleeren eines Schlauchbeutels (1), umfassend ein an einem Ende des Schlauchbeutels (1) fixiertes kappenartiges Aufnahmeteil (2), das eine rohrförmige Austrittsöffnung (3) und eine darin angeordnete Einrichtung zum Öffnen des Schlauchbeutels aufweist, **dadurch gekennzeichnet, dass** die Einrichtung ein helical-schneidendes Messer (4) ist.

2. Vorrichtung nach Anspruch 1, **dadurch gekennzeichnet, dass** das Messer (4) mittels eines einschiebbaren Stutzens (5) in der Austrittsöffnung (3) drehbar und in Schlauchbeutelrichtung verschiebbar ist.

3. Vorrichtung nach einem der Ansprüche 1 bis 2, **dadurch gekennzeichnet, dass** das Messer (4) in einer den Schlauchbeutel (1) öffnenden Endstellung arretierbar ist.

4. Vorrichtung nach einem der Ansprüche 2 bis 3, **dadurch gekennzeichnet, dass** der Stutzen (5) gegen die Innenwand der rohrförmigen Austrittsöffnung (3) dichtet.

## Claims

1. Device for emptying a hose bag (1) comprising a cap-like receiving part (2) fixed on one end of the hose bag (1), which receiving part (2) has a tubular outlet aperture (3) and an apparatus arranged therein for opening the hose bag, **characterised in that** the apparatus is a helical cutting blade (4).

2. Device according to claim 1, **characterised in that** the blade (4) is rotatable in the outlet aperture (3) by means of an insertable nozzle (5) and can be displaced in the direction of the hose bag.

3. Device according to either of claims 1 to 2, **characterised in that** the blade (4) can be locked in an end position opening the hose bag (1).

4. Device according to either of claims 2 to 3, **characterised in that** the nozzle (5) seals against the inner wall of the tubular outlet aperture (3).

## Revendications

1. Dispositif pour vider un sachet tubulaire (1), comportant une partie de réception (2) en forme de capuchon fixée à une extrémité du sachet tubulaire (1), partie qui comprend une ouverture de sortie tubulaire (3) et un organe agencé dans celle-ci pour ouvrir le sachet tubulaire, **caractérisé en ce que** l'organe est un couteau (4) de coupe hélicoïdale.

2. Dispositif selon la revendication 1, **caractérisé en ce que** le couteau (4) est mobile en rotation dans l'ouverture de sortie (3) au moyen d'un manchon (5) susceptible d'être introduit et mobile en translation en direction du sachet tubulaire.

3. Dispositif selon l'une des revendications 1 et 2, **caractérisé en ce que** le couteau (4) est susceptible d'être arrêté dans une position extrême ouvrant le sachet tubulaire (1).

4. Dispositif selon l'une des revendications 2 et 3, **caractérisé en ce que** le manchon (5) assure un étanchement contre la paroi intérieure de l'ouverture de sortie tubulaire (3).
